Europäisches Patentamt

European Patent Office

Office européen des brevets

(19)

(11) Numéro de publication : **0 085 824**
**B1**

(12)

# FASCICULE DE BREVET EUROPÉEN

(45) Date de publication du fascicule du brevet :
**15.05.85**

(21) Numéro de dépôt : **82870042.7**

(22) Date de dépôt : **13.07.82**

(51) Int. Cl.⁴ : **C 04 B 28/04**, B 28 B 7/08

(54) **Procédé de fabrication de produits en béton moulé et produits obtenus par ce procédé.**

(30) Priorité : **22.01.82 BE 207120**

(43) Date de publication de la demande :
**17.08.83 Bulletin 83/33**

(45) Mention de la délivrance du brevet :
**15.05.85 Bulletin 85/20**

(84) Etats contractants désignés :
**AT CH DE FR GB IT LI LU NL**

(56) Documents cités :
**DE-A- 1 784 979**
**DE-A- 2 137 879**
**CHEMICAL ABSTRACTS, vol. 88, 1978, page 278, no. 140836u, Columbus, Ohio, US**
**CHEMICAL ABSTRACTS, vol. 80, no. 26, 01 juli 1974, page 154, no. 148545d, Columbus, Ohio, US V.A. TIKHONOV: "Effect of acoustic activation on the adhesive properties of portland cement"**

(73) Titulaire : **ENJI S.A.(Société anonyme suisse)**
**1, Galeries Benjamin-Constant**
**CH-1002 Lausanne (CH)**

(72) Inventeur : **Delvaux, Jean Paul Hubert André**
**215, Route Provinciale**
**B-1301 Bierges-Wavre (BE)**

(74) Mandataire : **Modrie, Guy et al**
**Bureau Gevers 7, rue de Livourne**
**B-1050 Bruxelles (BE)**

Jouve, 18, rue St-Denis, 75001 Paris, France

## Description

La présente invention a pour objet un procédé de fabrication de produits en béton moulé à caractère artisanal.

On connaît divers procédés de fabrication de produits en béton moulé et les produits obtenus par chacun de ces procédés présentent leurs propres inconvénients. En ce qui concerne les bétons simplement vibrés, leur fabrication a le désavantage de faire remonter à leur surface une couche de mortier elle-même surmontée d'une couche de laitance. Cette couche de mortier n'offre pas les mêmes qualités que la masse du produit et il est fréquent, lorsque ces bétons sont utilisés pour des revêtements extérieurs, que cette couche de mortier s'écaille sous l'effet des chocs thermiques, notamment lors de l'épandage de sels de déneigement. Des stries qui seraient pratiquées en surface de tels bétons offrent peu de résistance ; elles sont de surcroît régulières et donnent au produit un aspect industriel. Cet aspect industriel se trouve aggravé par la régularité géométrique de ces produits démoulés après durcissement. De plus, la laitance dans laquelle sont formées les crêtes de ces stries est hautement polissable, de sorte que la qualité antidérapante procurée au produit par ces stries est amoindrie jusqu'à un certain degré d'usure, ce qui entraîne, entre les parties de revêtement les plus sollicitées et les autres, des différences de rugosité constituant un certain danger ainsi que des différences d'aspect. Quant au béton moulé dont la coloration est obtenue par pigmentation de la pâte de ciment, on sait que sa variation de teinte entre l'état sec et l'état mouillé est très importante, ce qui présente l'inconvénient de donner, dans l'un de ces états, un aspect différent de celui qui avait été choisi. En plus de la variation de teinte suivant l'état sec ou mouillé, les bétons pigmentés peuvent changer de teinte suivant leur degré d'usure. Enfin, les bétons moulés mécaniquement sous forte pression présentent le désavantage, de par leur régularité de surface et leurs dimensions rigoureusement précises, de ne pouvoir être utilisés pour des revêtements à caractère artisanal.

La présente invention a pour but de remédier à ces inconvénients et de procurer un procédé permettant d'obtenir un produit en béton qui présente une qualité et une homogénéité de structure sur toute son épaisseur, ce qui l'apparente à la pierre naturelle homogène. Les matériaux utilisés suivant ce procédé et les conditions particulières de ce dernier assurent au produit fini un aspect qui ne s'altère pratiquement pas suivant l'état sec ou mouillé du produit et suivant l'état d'usure. Il en va de même quant aux qualités antidérapantes dudit produit. Enfin, le procédé suivant l'invention, permet d'obtenir un produit moulé qui présente, tout en ayant une excellente planéité d'ensemble de sa surface apparente, des déformations des faces latérales, arêtes et angles procurant audit produit un caractère artisanal, tel que chaque élément est personnalisé, et rendant le placement moins tributaire de la précision d'exécution et du soin à apporter aux joints.

A cet effet, suivant l'invention, ce procédé consiste à préparer un béton constitué de gros granulat calcaire, de sable siliceux, de ciment portland dosé à environ 400 kg par m³ de béton, d'un adjuvant réducteur d'eau, et d'eau pour que le rapport eau/ciment soit $\leq 0,40$ et pour que la consistance du béton frais soit de catégorie 0 (« sèche ») suivant la norme belge NBN B 15-205 caractérisée par un degré de serrage (SC de Walz) supérieur à 1,26, à soumettre le moule, dans lequel le béton frais est déversé jusqu'à remplissage complet du moule, à des vibrations combinées à des chocs, à araser la coulée de béton, à racler le granulat instable à la surface de la coulée et à éliminer celui-ci, à talocher et lisser ladite surface qui constitue la face apparente du produit, à interrompre les vibrations et chocs communiqués au moule, à strier cette surface à la brosse, à déposer immédiatement sur le moule un plateau rigide présentant une surface plane destinée à venir en contact avec la surface striée, à faire pivoter le moule et ce plateau rigide de 180°, à procéder immédiatement au démoulage sur ledit plateau et à laisser sécher le produit sur ce dernier.

Suivant l'invention, on choisit le gros granulat pour qu'il soit plus tendre que les grains de sable siliceux entrant dans la composition du mortier.

L'invention a également pour objet les produits en béton moulé obtenu par le procédé susdit.

D'autres détails et particularités de l'invention ressortiront de la description du procédé donnée ci-après, à titre d'exemple non limitatif, et illustrée aux dessins annexés.

Les figures 1A à 1H sont des vues schématiques, en perspective, illustrant les étapes importantes et successives du procédé suivant l'invention.

Les figures 2 et 3 sont des vues schématiques partielles, en élévation et en coupe, d'un produit moulé suivant l'invention respectivement avant et après usure.

Dans les différentes figures, les mêmes notations de référence désignent des éléments identiques ou analogues.

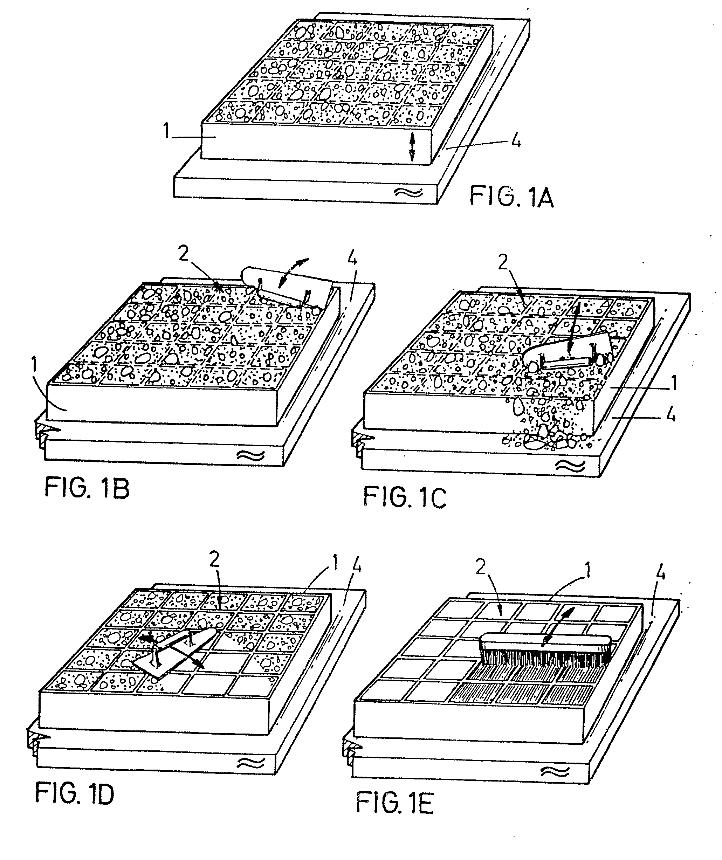

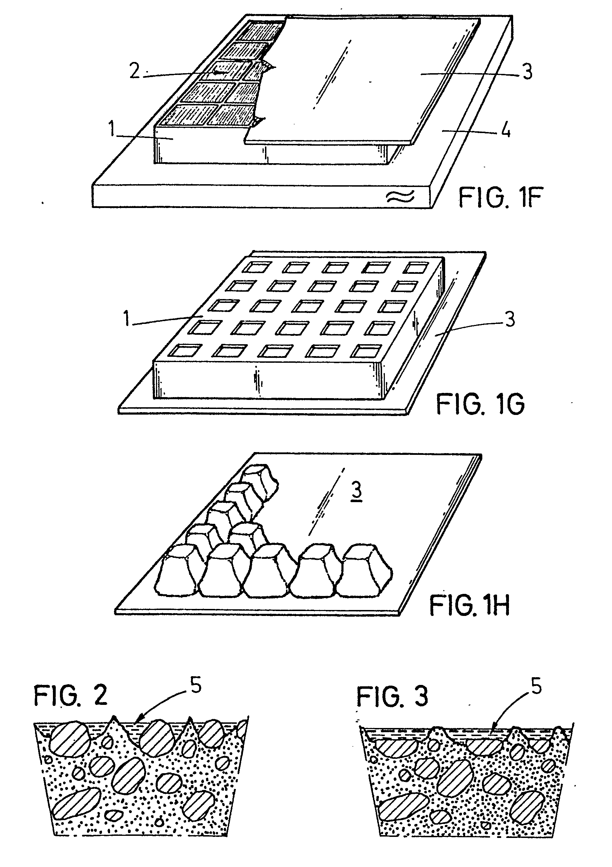

Le procédé suivant l'invention consiste à préparer un béton, dont la consistance du mélange frais est de catégorie 0 (« sèche ») suivant la norme belge NBN B 15-205 caractérisée par un degré de serrage (SC de Walz) supérieur à 1,26, à base de gros granulat calcaire, de sable siliceux, de ciment portland blanc dosé à environ 400 kg par m³ de béton, d'un adjuvant réducteur d'eau, et d'eau pour que le rapport eau/ciment soit plus petit ou égal à 0,40. Pour permettre un démoulage immédiat du béton et assurer au produit sa texture proche de la pierre naturelle, le procédé suivant l'invention, prévoit, pour assurer le serrage d'un mélange frais de telle consistance, le mode opératoire suivant : on soumet le moule 1, dans lequel le béton frais est déversé jusqu'à son remplissage complet, à des vibrations combinées à des chocs (figure 1A) qui procurent au béton ses qualités mécaniques et autres sans ségrégation du gros granulat qui se maintient très près de la surface 2 et sans ressuage du mortier ; on arase la coulée de béton (figure 1B) ; on racle le granulat instable à la surface de la coulée et on l'élimine (figure 1C) ; on procède à un serrage de surface du béton par talochage manuel vigoureux qui assure une compacité du béton égale en surface et dans la masse et on lisse la surface 2 de la coulée (figure 1D) ; on interrompt alors les chocs et vibrations que l'on a communiqués au moule pendant une période très courte et qui n'excède guère la minute quelles que soient les dimensions des produits ; on strie ensuite manuellement ladite surface 2 à l'aide d'une brosse rude pour obtenir des stries irrégulières (figure 1E) tant en alignement qu'en profondeur du fait que le gros granulat présent en surface fait dévier les poils de la brosse et empêche, à certains endroits, leur pénétration dans le béton. Après cette dernière opération, on dépose immédiatement sur le moule un plateau rigide 3 en bois naturel (figure 1F) qui présente l'avantage d'absorber l'eau de la surface du béton frais, ce qui améliore les qualités de cette surface. On fait alors subir à l'ensemble plateau 3 et moule 1 une rotation de 180° (figure 1G) et on démoule immédiatement sur ce plateau 3 en soumettant éventuellement le moule à de légères vibrations. Ce démoulage immédiat conduit à des déformations des faces, arêtes et angles qui donnent au produit son caractère artisanal tout en conservant grâce au plateau 3 une planéité de la surface striée qui procure confort et sécurité à la marche. Grâce à la présence de gros granulat en surface, on évite, lors de la rotation de 120° susdite et du démoulage, l'écrasement des stries formées au brossage. Finalement, on laisse les produits démoulés sécher sur les plateaux 3 (figure 1H).

Il est évident que le calibre du gros granulat calcaire utilisé est fonction des dimensions des produits. Toutefois, son diamètre maximum, pour les produits de grandes dimensions, est d'environ 20 mm et, pour les produits de petites dimensions, de l'ordre de 10 mm. Pour les premiers produits précités, le gros granulat est utilisé en deux calibres jointifs, tandis que pour les seconds, il est utilisé en calibre unique. Le sable siliceux entrant dans la composition du béton a un calibre compris entre 0,15 et 0,8 mm, et titre entre 10 % et 20 %, et de préférence 20 %, de particules inférieures à 0,25 mm qui sont les agents colorants naturels du mortier.

Le ballast pierreux du béton, comprenant le gros granulat et le sable siliceux précités, est constitué, pour des produits de petites dimensions, de 60 à 65 % de grains supérieurs à 2 mm et de 35 à 40 % de grains inférieurs à 2 mm et, pour les produits de grandes dimensions, de 65 à 70 % de grains supérieurs à 2 mm et de 30 à 35 % de grains inférieurs à 2 mm. Ce ballast pierreux présente une lacune granulométrique importante entre le sable et le gros granulat, cette lacune couvrant les intervalles de 0,5 mm à 2,5 mm pour les produits de petites dimensions et de 0,5 mm à 5 mm pour les produits de grandes dimensions.

Le gros granulat, le sable et le ciment sont dosés pour que le béton titre environ 50 % de mortier. On choisit le gros granulat plus tendre que les grains de silice du mortier pour la raison suivante : comme le gros granulat s'use plus rapidement que la texture « grain de sable » du mortier, il s'ensuit qu'au fil du temps, la rugosité « sèche » du produit est toujours assurée par le mortier, tandis que la rugosité « à l'état mouillé » résulte, avant usure, des stries précitées et, après usure, de l'usure sélective du gros granulat. En d'autres termes, le caractère antidérapant du produit provient du fait qu'à l'état sec il présente une surface unie finement abrasive et, qu'à l'état mouillé, le relief de sa surface, procuré par les stries ou par l'usure sélective du gros granulat, rompt le film d'eau 5 subsistant sur le produit (figures 2 et 3).

Suivant l'invention, on choisit le gros granulat pour qu'il ait une teinte proche, à l'état sec comme à l'état mouillé, de celle du mortier. Vu la teneur du béton en mortier et ladite teinte du granulat, la coloration naturelle, donc sans pigments, du produit est procurée principalement et originellement par le mortier. Après usure profonde dudit produit, la dominante sur le plan coloration reste le fait du mortier, et demeure donc quasi constante quels que soient l'état et le degré d'usure du produit. Les teintes du sable, du gros granulat, avec du ciment blanc, sont choisies pour que la teinte du produit fini soit définie par les facteurs suivants, déterminés au Colorcord : longueur d'onde (Lambda en n m) de l'ordre de 585 ± 5 pour le produit sec et le produit mouillé. Pureté en % de l'ordre de 17,5 ± 3 pour le produit sec et de l'ordre de 24,5 ± 3 pour le produit mouillé. Luminosité Epsilon en % de l'ordre de 50 ± 5 pour le produit sec et de l'ordre de 43 ± 5 pour le produit mouillé.

Pour obtenir le serrage désiré de ce béton de consistance sèche, on utilise, conjointement les vibrations et les chocs fournis à un moule qui, posé librement sur une table vibrante 4, présente, rempli de béton, une fréquence de vibration différente de celle procurée à la table. Les moules utilisés sont du type lourd, c'est-à-dire de l'ordre de 50 kg, la table vibrante pesant de l'ordre de 200 kg. Les vibrations provoquées sont fortes et à basse fréquence — $F_c$ de l'ordre de 1 400 kg à 3 000 vibrations/minute.

On constate, aux figures 2 et 3, que quel que soit le degré d'usure, le pouvoir antidérapant du produit est toujours maintenu. En effet, le pied est toujours en contact avec du mortier aux grains de silice apparents, antidérapant par nature ; des stries avant usure ou des dénivellations après l'usure, qui s'opèrent différemment sur le granulat et le mortier, subsistent toujours et rompent le film d'eau 5 pour assurer l'adhérence à l'état mouillé.

## Revendications

1. Procédé de fabrication de produits en béton moulé à caractère artisanal, caractérisé en ce qu'il consiste à préparer un béton constitué de gros granulat calcaire, de sable siliceux, de ciment portland dosé à en viron 400 kg par m³ de béton, d'un adjuvant réducteur d'eau, et d'eau pour que le rapport eau/ciment soit ≤ 0,40 et pour que la consistance du béton frais soit de catégorie 0 (« sèche ») suivant la norme belge NBN B 15-205 caractérisée par un degré de serrage (SC de Walz) supérieur à 1,26, à soumettre le moule (1), dans lequel le béton frais est déversé jusqu'à remplissage complet du moule, à des vibrations combinées à des chocs, à araser la coulée de béton, à racler le granulat instable à la surface (2) de la coulée et à éliminer celui-ci, à talocher et lisser ladite surface (2) qui constitue la face apparente du produit, à interrompre les vibrations et chocs communiqués au moule, à strier cette surface (2) à la brosse, à déposer immédiatement sur le moule un plateau rigide (3) présentant une surface plane destinée à venir en contact avec la surface striée, à faire pivoter le moule (1) et ce plateau rigide (3) de 180°, à procéder immédiatement au démoulage sur ledit plateau (3) et à laisser sécher le produit sur ce dernier.

2. Procédé suivant la revendication 1, caractérisé en ce que le calibre du gros granulat calcaire utilisé est fonction des dimensions des produits ; le diamètre maximum du gros granulat étant, pour les produits de grandes dimensions, de l'ordre de 20 mm et, pour les produits de petites dimensions, de l'ordre de 10 mm.

3. Procédé suivant la revendication 2, caractérisé en ce que l'on utilise le gros granulat en deux calibres jointifs pour les produits de grandes dimensions et en calibre unique pour les produits de petites dimensions.

4. Procédé suivant l'une quelconque des revendications 1 à 3, caractérisé en ce que le sable siliceux naturellement coloré utilisé a un calibre compris entre 0,15 et 0,8 mm, ce sable titrant entre 10 % à 20 % de particules inférieures à 0,25 mm.

5. Procédé suivant la revendication 4, caractérisé en ce que le ballast pierreux du béton, comprenant le gros granulat et le sable siliceux précités, est constitué, pour des rpoduits de petites dimensions, de 60 à 65 % de grains supérieurs à 2 mm et de 35 à 40 % de grains inférieurs à 2 mm et, pour les produits de grandes dimensions, de 65 à 70 % de grains supérieurs à 2 mm et de 30 à 35 % de grains inférieurs à 2 mm.

6. Procédé suivant la revendication 5, caractérisé en ce que le ballast pierreux utilisé présente une lacune granulométrique importante se situant entre le sable fin et le gros granulat, cette lacune couvrant les intervalles de 0,5 mm à 2,5 mm pour les produits de petites dimensions et de 0,5 mm à 5 mm pour les produits de grandes dimensions.

7. Procédé suivant l'une quelconque des revendications 1 à 6, caractérisé en ce qu'on dose le gros granulat, le sable et le ciment pour que le béton titre environ 50 % de mortier.

8. Procédé suivant l'une quelconque des revendications 1 à 7, caractérisé en ce que le ciment utilisé est du ciment portland blanc.

9. Procédé suivant l'une quelconque des revendications 1 à 8, caractérisé en ce qu'on choisit le gros granulat pour qu'il soit plus tendre que les grains de sable siliceux entrant dans la composition du mortier.

10. Procédé suivant l'une quelconque des revendications 1 à 9, caractérisé en ce qu'on choisit le gros granulat pour qu'il ait une teinte proche, à l'état sec comme à l'état mouillé, de celle du mortier.

11. Procédé suivant l'une quelconque des revendications 1 à 10, caractérisé en ce que les teintes du sable, du gros granulat et du ciment sont choisies pour que la teinte du produit fini soit définie par les facteurs suivants, déterminés au Colorcord ; longueur d'onde (Lambda en n m) de l'ordre de 585 ± 5 pour le produit sec et le produit mouillé — pureté en % de l'ordre de 17,5 ± 3 pour le produit sec et de l'ordre de 24,5 ± 3 pour le produit mouillé — luminosité Epsilon en % de l'ordre de 50 ± 5 pour le produit sec et de l'ordre de 43 ± 5 pour le produit mouillé.

12. Procédé suivant l'une quelconque des revendications 1 à 11, caractérisé en ce qu'on utilise un moule (1) posé librement sur une table vibrante (4).

13. Procédé suivant l'une quelconque des revendications 1 à 12, caractérisé en ce que le démoulage sur le plateau rigide (3) s'effectue en soumettant le moule (1) à des vibrations.

14. Procédé suivant l'une quelconque des revendications 1 à 13, caractérisé en ce que la surface du plateau rigide (3) est constituée par un matériau absorbant l'humidité.

15. Procédé suivant l'une quelconque des revendications 1 à 14, caractérisé en ce que le raclage, le talochage, le lissage et le brossage précités sont réalisés manuellement.

16. Produit en béton obtenu grâce au procédé suivant l'une quelconque des revendications 1 à 15.

## Claims

1. Method for manufacturing cast concrete articles of hand-crafted character, characterized in that it consists to prepare a concrete comprised of large calcareous granulate, siliceous sand, Portland cement in a porportion of about 400 kg per m³ from concrete, a water-reducing additive, and water to have the water/cement ratio ≤ 0,40 and the consistency of the green concrete lie in class 0 (« dry ») as defined in Belgian Standard NBN B 15-205 characterized by a tightening rate (Walz's SC) higher than 1,26, subjecting the mould (1), the green concrete is poured into, up to complete filling of said mould, to vibrations combined with impacts, levelling the concrete casting, scraping the unstable granulate on the casting surface (2) and removing same, hawking and smoothing said surface (2) which comprises the visible surface of the article, stopping the vibrations and impacts imparted to the mould, brush-scoring said surface (2), laying directly on said mould a rigid plate (3) having a plane surface to contact the scored surface, swinging said mould (1) and rigid plate (3) over 180°, unmoulding directly on said plate (3) and letting said article dry on said plate.

2. Method as defined in claim 1, characterized in that the size of the large calcareous granulate being used is dependent on the article size, the maximum diameter of said large granulate being for the large-size articles, about 20 mm and for the small-size articles, about 10 mm.

3. Method as defined in claim 2, characterized in that the large granulate is used in two adjacent sizes for the large articles, and in a single size for the small articles.

4. Method as defined in any one of claims 1 to 3, characterized in that the natural-colour siliceous sand being used has a size lying between 0,15 and 0,8 mm, said sand having between 10 % and 20 % particles with a size smaller than 0,25 mm.

5. Method as defined in claim 4, characterized in that the stony ballast of the concrete, which comprises said large granulate and siliceous sand, is comprised for small-size articles, of 60 to 65 % grains larger than 2 mm and 35 to 40 % grains smaller than 2 mm, and for the large-size articles, of 65 to 70 % grains larger than 2 mm and 30 to 35 % grains smaller than 2 mm.

6. Method as defined in claim 5, characterized in that the stony ballast being used has a substantial granulometry gap lying between the fine sand and the large granulate, said gap covering the intervals from 0,5 to 2,5 mm for small-size articles, and from 0,5 to 5 mm for the large-size articles.

7. Method as defined in any one of claims 1 to 6, characterized in that the large granulate, sand and cement are metered as to have the concrete assaying about 50 % mortar.

8. Method as defined in any one of claims 1 to 7, characterized in that the cement being used is white Portland cement.

9. Method as defined in any one of claims 1 to 8, characterized in that the larger granulate is selected as to be softer than the siliceous sand grains which is part of the mortar mixture.

10. Method as defined in any one of claims 1 to 9, characterized in that the large granulate is selected as to have a shade which approximates both in dry and moist conditions, the mortar shade.

11. Method as defined in any one of claims 1 to 10, characterized in that the shades of the sand, large granulate and cement are so selected as to have the shade of the final article defined by the following factors, as determined with a Colorcord : wave length (Lambda in n m) in the range of 585 ± 5 for the dry article and the moist article — purity by percent about 17,5 ± 3 for the dry article and about 24,5 ± 3 for the moist article — Epsilon luminosity by percent in the range of 50 ± 5 for the dry article and in the range of 43 ± 5 for the moist article.

12. Method as defined in any one of claims 1 to 11, characterized in that the mould (1) bears loosely on a vibrating table (4).

13. Method as defined in any one of claims 1 to 12, characterized in that the unmoulding on the rigid plate (3) is obtained by subjecting the mould (1) to vibrations.

14. Method as defined in any one of claims 1 to 13, characterized in that the surface of said rigid plate (3) is comprised of a moisture-absorbing material.

15. Method as defined in any one of claims 1 to 14, characterized in that said scraping, hawking, smoothing and brushing are performed by hand.

16. Cast concrete articles obtained by a method as defined in any one of claims 1 to 15.

**Patentansprüche**

1. Verfahren zum Herstellen gegossener Erzeugnisse aus Beton mit handwerklichem Charakter, dadurch gekennzeichnet, daß es in der Herstellung eines Betons besteht, der sich zusammensetzt aus : grobem, kalkhaltigem Granulat, aus siliziumhaltigem Sand, aus Portlandzement in einer Dosierung von etwa 400 kg pro m³ Beton, aus einem Wasser reduzierendem Zusatzstoff und aus Wasser, sodaß das Verhältnis Wasser/Zement ≤ 0,40 ist, und die Konsistenz des frischen Betons der Kategorie 0 (« Trocken ») gemäß der belgischen Norm NBN B 15-205 entspricht, gekennzeichnet durch : einen Preßgrad (SC de Walz) oberhalb 1,26 ; die Form (1), in welche der Frische Beton bis zur vollständigen Füllung der Form eingegossen wird, wird Vibrationen kombiniert mit Stößen unterworfen ; die Betonschüttung wird abgeschabt ; das instabile Granulat an der Oberfläche (2) der Schüttung wird abgekratzt und entfernt ; die Oberfläche (2), welche die sichtbare Seite des Erzeugnisses bildet, wird durch Reiben geglättet und eben gemacht ; die der Form mitgeteilten Vibrationen und Stöße werden unterbrochen ; die Oberfläche (2) wird mit der Bürste gestrichen ; unmittelbar auf die Form wird eine starre Platte (3) gelegt, welche eine ebene Oberfläche darbietet, die ihrerseits dazu dient, in Kontakt mit der gebürsteten Oberfläche zu kommen ; die Form (1) und die starre Platte (3) werden um 180° verschwenkt ; unmittelbar hierauf wird die Entformung auf der Platte (3) vorgenommen ; und man läßt das Erzeugnis auf letzterer trocknen.

2. Verfahren nach Anspruch 1, dadurch gekennzeichnet, daß die Korngröße des verwendeten, groben, kalkhaltigen Granulats von den Abmessungen des Erzeugnisses abhängt, wobei der maximale Durchmesser des groben Granulats bei Erzeugnissen großer Abmessungen in der Größenordnung von 20 mm und für Erzeugnisse kleiner Dimensionen in der Größenordnung von 10 mm liegt.

3. Verfahren nach Anspruch 2, dadurch gekennzeichnet, daß man das grobe Granulat bei den Erzeugnissen großer Abmessungen in zwei aneinander angrenzenden Korngrößen und bei den Erzeugnissen kleiner Abmessungen in einer einzigen Korngröße verwendet.

4. Verfahren nach einem der Ansprüche 1 bis 3, dadurch gekennzeichnet, daß der verwendete, natürlich gefärbte, siliziumhaltige Sand eine Korngröße zwischen 0,15 und 0,8 mm hat, wobei dieser Sand einen Gehalt an Teilchen kleiner als 0,25 mm zwischen 10 % und 20 % aufweist.

5. Verfahren nach Anspruch 4, dadurch gekennzeichnet, daß der steinige Ballast des Betons aus dem groben Granulat und dem siliziumhaltigen Sand bei Erzeugnissen kleiner Abmessungen 60 % bis 65 % an Körnern größer als 2 mm und 35 % bis 40 % kleiner als 2 mm und bei Erzeugnissen großer Abmessungen 65 % bis 70 % Körner größer als 2 mm und 30 % bis 35 % kleiner als 2 mm enthält.

6. Verfahren nach Anspruch 5, dadurch gekennzeichnet, daß der verwendete steinige Ballast eine beträchtliche granulometrische Lücke zwischen dem feinen Sand und dem groben Granulat aufweist, wobei diese Lücke die Zwischenräume von 0,5 mm bis 2,5 mm bei den Erzeugnissen kleiner Abmessungen und von 0,5 mm bis 5 mm bei den Erzeugnissen großer Abmessungen überdeckt.

7. Verfahren nach einem der Ansprüche 1 bis 6, dadurch gekennzeichnet, daß man das grobe Granulat, den Sand un den Zement so dosiert, daß der Beton etwa 50 % Mörtel enthält.

8. Verfahren nach einem der Ansprüche 1 bis 7, dadurch gekennzeichnet, daß der verwendete Zement weißer Portlandzement ist.

9. Verfahren nach einem der Ansprüche 1 bis 8, dadurch gekennzeichnet, daß man das grobe Granulat so wählt, daß es weicher ist, als die Körner des siliziumhaltigen Sandes sind, die in die Zusammensetzung des Mörtels eingehen.

10. Verfahren nach einem der Ansprüche 1 bis 9, dadurch gekennzeichnet, daß man das grobe Granulat so wählt, das es sowohl im trockenen wie im feuchten Zustand eine Farbtönung hat, die derjenigen des Mörtels nahekommt.

11. Verfahren nach einem der Ansprüche 1 bis 10, dadurch gekennzeichnet, daß die Farbtönungen des Sandes, des groben Granulats und des Zements so gewählt werden, daß die Farbtönung des Enderzeugnisses durch die folgenden Faktoren definiert ist, die ihrerseits am Colorcord bestimmt sind ; Wellenlänge (Lambda in n m) in der Größenordnung von 585 ± 5 bei trockenem und feuchtem Erzeugnis-Reinheit in % in der Größenordnung von 17,5 ± 3 bei trockenem Produkt und in der Größenordnung von 24,5 ± 3 bei feuchtem Erzeugnis-Helligkeit (Luminosität) Epsilon in % in der Größenordnung von 50 ± 5 bei trockenem Erzeugnis und in der Größenordnung von 43 ± 5 bei feuchtem Erzeugnis.

12. Verfahren nach einem der Ansprüche 1 bis 11, dadurch gekennzeichnet, daß man eine Form (1) benutzt, die frei auf einen vibrierenden Tisch (4) aufgesetzt ist.

13. Verfahren nach einem der Ansprüche 1 bis 12, dadurch gekennzeichnet, daß sich die Entformung auf der starren Platte (3) vollzieht, während die Form (1) den Schwingungen unterworfen ist.

14. Verfahren nach einem der Ansprüche 1 bis 13, dadurch gekennzeichnet, daß die Oberfläche der starren Platte (3) von einem feuchtigkeitabsorbierenden Material gebildet ist.

15. Verfahren nach einem der Ansprüche 1 bis 14, dadurch gekennzeichnet, daß das Abkratzen, das Abreiben, das Kletten und das Bürsten manuel vorgenommen werden.

16. Erzeugnis aus Beton hergestellt nach dem Verfahren gemäß einem der Ansprüche 1 bis 15.

FIG. 1A

FIG. 1B

FIG. 1C

FIG. 1D

FIG. 1E

FIG. 1F

FIG. 1G

FIG. 1H

FIG. 2

FIG. 3